# EUROPEAN PATENT SPECIFICATION

(11) **EP 3 117 982 B1**
(45) Date of publication and mention of the grant of the patent: **25.12.2019**
(21) Application number: 15177165.6
(22) Date of filing: 16.07.2015
(51) Int. Cl.: B29C 64/106, B29C 64/209, B33Y 50/02, B33Y 30/00

(54) **3D PRINTING SYSTEM AND PROCESS**
3D-DRUCKSYSTEM UND -VERFAHREN
PROCEDE ET SYSTÈME D'IMPRESSION 3D

(43) Date of publication of application: 18.01.2017
(73) Proprietor: SCULPMAN BVBA, 1755 Gooik (BE)
(72) Inventor: VANACKER, Gerolf, B-1755 Gooik (BE)
(74) Representative: IPLodge bvba

(56) References cited:
- EP-A1- 0 967 067
- WO-A2-2011/092269
- CN-U- 204 020 008
- US-A- 6 030 199

## Description

### Technical field of the invention

The present invention relates to a 3D printing system capable of printing with pellets and a 3D printing process therewith.

### Background of the invention

Additive manufacturing systems are used to 'print' digital 3D representations by processing horizontal cross-sections of the part (layers). These layers are sliced by a computer algorithm, and for each of these layers a tool path and appropriate process parameters are calculated. The resulting program allows the additive manufacturing apparatus to build up the part layer by layer by using one or more additive manufacturing techniques (e.g. selective laser sintering, powder/binder jetting, stereolithographic processes or extrusion-based techniques).

The extrusion method implemented in present machines (proprietary and open-source) is known as Fused Deposition Modeling (FDM). FDM is disclosed, for example, in US 5,121,329, and uses strands or filaments of raw build material which are driven through a heated nozzle which liquefies this material for deposition on the build platform. The filament is driven through the extrusion head by applying a force (usually with an electric motor) on the solid part of the material. This still solid filament exercises a pushing pressure on the already liquefied portion deeper inside the heated nozzle and as such controls the flow of the build material onto the build area. If the filament is driven forwards (towards the nozzle), material flows out of the nozzle, if it is retracted, the flow stops (although a portion of the already molten material may leak due to gravity). The speed at which the build material is pushed through the nozzle defines the flow at which the liquefied material is deposited.

US 5,121,329 discloses an apparatus for making three-dimensional physical objects of a predetermined shape by sequentially depositing multiple layers of solidifying material on a base member in a desired pattern, comprising: a movable head having flow-passage means therein connected to a dispensing outlet at one end thereof, said outlet comprising a tip with a discharge orifice of predetermined size therein; a supply of material which solidifies at a predetermined temperature, and means for introducing said material in a fluid state into said flow-passage means; a base member disposed in close, working proximity to said dispensing outlet of said dispensing head; and mechanical means for moving said dispensing head and said base member relative to each other in three dimensions along "X," "Y," and "Z" axes in a rectangular coordinate system in a predetermined sequence and pattern and for displacing said dispensing head a predetermined incremental distance relative to the base member and thence relative to each successive layer deposited prior to the commencement of the formation of each successive layer to form multiple layers of said material of predetermined thickness which build up on each other sequentially as they solidify after discharge from said orifice; and means for metering the discharge of said material in a fluid stream from said discharge orifice at a predetermined rate onto said base member to form a three-dimensional object as said dispensing head and base member are moved relative to each other.

US 2015-130101A1 discloses a method of three dimensional printing, the method comprising the steps of: delivering a plurality of pellets to a printer assembly; forming a pellet of the plurality of pellets into a molten material; and expelling the molten material from the printer assembly to facilitate printing a three dimensional object.

US 6,251,340 discloses a filament deposition system for manufacturing three-dimensional objects by selectively depositing material filaments on a position controllable substrate, the filament deposition system preferably including a crucible for holding a reservoir of filament forming material, an orifice disposed in the bottom of the crucible through which the forming material passes to form a flow of material filaments, and a flow control apparatus for controlling and selectively depositing the flow of material filaments on the substrate exclusively where required to form the three-dimensional object.

US 2015-0035209A1 discloses a method of forming a three-dimensional metallic object is provided comprising extruding a metal oxide paste comprising metal oxide particles, a polymeric binder and an organic solvent, through a tip to deposit sequential layers of the metal oxide paste on a substrate, whereby a three-dimensional metal oxide object is formed on the substrate, and exposing the three-dimensional metal oxide object to a reducing gas at a temperature and for a period of time sufficient to reduce and to sinter the metal oxide particles, whereby the three-dimensional metallic object is formed.

Pellets comprising at least 50% by volume of micron-sized metallic or ceramic particles in the at least one polymer as a binder, such as Metal Injection Moulding (MIM) and Ceramic Injection Moulding (CIM) raw materials, are very brittle in filament form (due to the high loading of rigid particles in a relatively small amount of polymer), they cannot easily be formed into filaments as described in US 5,121,329 and hence cannot be extruded with the techniques presented there and in prior art extrusion-based additive manufacturing machines.

US 6,505,089 discloses a method of manufacturing a 3D model, the model comprising steps of designing the 3D model and collecting shape data of the 3D model slicing the 3D model into several layers with thickness in height, dividing each of the layers into several sublayers so that a sublayer is formed by depositing a material at once, depositing a material using variable nozzle in accordance with shape data in relation to a sublayer divided from one layer of the 3D model, and deciding whether the one layer of the 3D model has been completed. However, US 6,505,089 B1 does not make it clear how the barriers and guards (and other actively operating subsystems) could be realistically actuated.

US 6,030,199 discloses in a system for forming a three-dimensional object by depositing successive layers of a molten forming material on a movable substrate, an apparatus for providing said layers comprising: a container for holding said molten forming material; an inlet port for supplying forming material to said container; movable member for pressurizing said molten forming material within said container; an outlet port; and an adjustable planar nozzle mechanism cooperating with said outlet port for forming variable size planar jets of said pressurized molten forming material, said planar jets being deposited in layers on said substrate to form said three dimensional object and in a preferred embodiment discloses that said adjustable planar nozzle mechanism comprises cooperating position controllable plates, which are movable in relation to each other, for forming a variable width planar nozzle opening.

### Summary of the invention

The invention is defined by a printing system in accordance with claim 1, the use of the printing system in accordance with claim 8 and by a process in accordance with claim 10.

The present invention concerns the fabrication of metal and ceramic parts by using an extrusion-based additive manufacturing approach. The extrusion-based 3D printer deposits a mixture of particles comprising at least one polymer, preferably micron-sized metal, metal-precursor or ceramic particles dispersed in said at least one polymer as a binder, onto a build platform, layer-by-layer. According to the invention, the build material is supplied in the form of pellets comprising at least one polymer, which may be a thermoplastic polymer or a wax. The invention further provides for extrusion directly from such pellets. The material in pellet form can be extruded by means of mechanical propulsion (plunger or auger (feed-screw) type) or by hydraulic or air pressure through a heated chamber, in which they are melted, into a nozzle which deposits the material initially onto the build platform and latterly onto the preceding layer. A 3D-printed part thus created out of these pellets has a structure comprising at least one polymer, with a composite structure of metal or ceramic particles dispersed in the at least one polymer being preferred. If the structure created out of these pellets is a composite structure of metal or ceramic particles dispersed in the at least one polymer as a binder, before the part can be sintered to form a solid metal or ceramic object most of the at least one polymer must be removed (debinding, which may be performed by applying heat or solvents).

The present invention provides for extrusion directly from the pellets. The material in pellet form can be extruded by means of mechanical propulsion (plunger or auger (feed-screw) type) or by hydraulic or air pressure of the pellets through a heated chamber, in which they are melted, into a nozzle which deposits the material onto the layer. Using an extrusion process (plunger, auger, pneumatic,...) there is less control over the liquid material flow compared to the filament-based approach of FDM, since in filament-based FDM the molten material sticks to the actively controlled solid filament that pushes it through the heated nozzle. In addition, these filaments have a very small diameter and mass, such that the amount of liquid material at any time in the heated chamber is small. These characteristics allow for adequate retraction control (to stop the extrusion) and leakage prevention.

The extrusion of pellets results in more uncontrolled leakage of material as well as less retraction influence when creating 'under-pressure' (e.g. by lifting the plunger or reversing the auger) even for pellets only comprising polymers, particularly in the case of relatively larger chambers filled with molten polymer. This leakage is even more substantial in the case of pellets comprising at least 50% by volume of metallic or ceramic particles in at least one polymer as a binder. An additional system is therefore necessary to control adequately the material flow out of the nozzle to prevent the loss of dosing accuracy due to such leakage.

The inventors have surprisingly found that this loss of dosing accuracy relative to a filament-based approach can be compensated for by using a nozzle with variable geometry. The nozzle incorporates an actively controlled 'gate', which controls the nozzle opening in one dimension, while the other dimension remains fixed. Thus, the nozzle is no longer circular (as is the case with the present state-of-the-art) but rather rectangular and produces a ribbon rather than a filament. US 6,505,089B1 discloses a nozzle having an orifice defined by a vertical plane, and explains that the nozzle operates over a piece on a turntable to print "roads" that form layers in a horizontal fashion, but does not provide for axial rotation of the nozzle, whereas the present invention provides for the orifice of the actively controlled gate being in a horizontal plane with the extruded molten ribbon being provided vertically above the build platform. This has the disadvantage that a straight-line path off-centre requires a concerted angular motion of the turntable and X-Y movement of the nozzle, which means that if the path is not parallel to the Y-axis the nozzle will always perform the deposition at an angle, resulting in a skewed deposition path. Moreover, when the deposition path changes orientation far from the centre of the turntable, both the nozzle X-Y position and the turntable angular orientation needs to change considerably to accommodate for the new path stroke, which not only poses problems with the precision in material deposition (since in the best case the nozzle hovers over the last previous point during the re-orientation) but also can increase the printing time significantly.

According to a first aspect of the present invention a three-dimensional printing system is provided, the three-dimensional printing system comprising a print head vertically arranged above a build platform, said print head having a variable-width nozzle with a rectangular opening having a size, a means of moving said print-head and a means for extruding pellets through said variable-width nozzle to provide a molten ribbon vertically above said build platform, said pellets comprising at least one polymer, said extrusion means incorporating a heated chamber before said nozzle and said variable-width nozzle incorporating an actively controlled gate.

According to a second aspect of the present invention, a three-dimensional printing process, said process comprising the steps of: extruding pellets through a rectangular variable-width nozzle incorporating an actively controlled gate to provide a molten ribbon vertically above a build platform to provide a body.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1A shows an embodiment of the present invention in which the feed material is transported under pressure to the nozzle by the motion of a rotating auger **23.**
Fig. 1B shows an embodiment of the present invention in which a reciprocal piston **23b** ensures the pressurization and transport of the build material towards the nozzle.
Fig. 1C shows an embodiment of the present invention in which material refill is by gravity reload with a piston-type material pressurizer.
Fig. 2A shows an embodiment of the present invention in which the pellet material transport is by blow-in with a pick-up structure.
Fig. 2B shows an embodiment of the present invention in which the pellet container is inverted, and the ingress of pellets into the airstream **62** is aided by gravity.
Fig. 2C shows an embodiment of the present invention in which a gravity-based reloading system is used in which the build material can be changed on the fly by simply navigating to another container filled with another pellet type.
Fig. 3A shows an embodiments of the present invention with a nozzle with variable geometry in one direction.
Fig. 3B and 3C show how gradually closing the slit modifies the extrusion width with in Fig. 3C the barriers **43** touching each other thereby closing the extrusion opening completely.
Fig. 3D shows a bottom view of the system with nozzles with variable geometry in one direction.
Fig. 4A and 4B show embodiments of the present invention with variable geometry in which the nozzle rotates freely.
Fig. 5A, 5B and 5C show embodiments of the present invention with freely rotating nozzles, a bearing and a heat-block.
Fig. 6A shows an embodiment of the present invention with a configuration of two rotational motors **96** rigidly attached to an isolating structure **95** which in turn is fixed to the tube **92** and heat-block **93.**
Fig. 6B shows an inverse view of Fig. 6A
Fig. 7 shows a subtractive assembly mounted onto the printer's end-effector **100.**
In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment.

The following terms are provided solely to aid in the understanding of the invention.

### Definitions

The term "metallic particle", as used in disclosing the present invention, means a particle substantially comprising one or more metals
The term "ceramic particle", as used in disclosing the present invention, means an inorganic, non-metallic particle processed or used at high temperatures including oxides, nitrides, borides, carbides, silicides, sulphides, aluminides, beryllides, phosphides, antimonides, arsenides and mixtures thereof.
The term "3D-printing", otherwise known as additive manufacturing, AM, as used in disclosing the present invention, means an additive process in which three-dimensional objects are made by laying down successive layers of material under computer control.
The term "green body", as used in disclosing the present invention, means an object who's main constituent is weakly bound ceramic or metallic material, usually in the form of bonded powder, for example with a binder.
The term "debinding", as used in disclosing the present invention, means removal of binder, which may be by dissolution, for example with solvent, acid or water; catalytic removal or thermal removal.
The term "brown body", as used in disclosing the present invention, means the object produced by "debinding" a "green body".

### Three-dimensional printing system

According to a first aspect of the present invention, a three-dimensional printing system is provided in accordance with claim 1. The three-dimensional printing system comprising a print head vertically arranged above a build platform, said print head having a variable-width nozzle with a rectangular opening having a size, a means of moving said print-head and a means for extruding pellets through said variable-width nozzle to provide a molten ribbon vertically above said build platform, said pellets comprising at least one polymer, said extrusion means incorporating a heated chamber before said nozzle and said variable-width nozzle incorporating an actively controlled gate.

According to the present invention, said variable-width nozzle is axially rotatable, preferably infinitely rotatable i.e. without any restriction, for example, by cables.

This actively closed gate can be used to close the nozzle completely to prevent material leakage. The rectangular nature of the nozzle enables wider extrusion 'roads' to be made where applicable, which can shorten printing time significantly. On the other hand, the opening can be closed to a smaller value to print finer detail. Also, the fact that the nozzle opening becomes rectangular can improve surface quality of the object since stacking of 'cylinder-shaped roads' by a circular nozzle produces a ribbed surface, while a rectangular opening would stack straight sections giving a smoother outside surface.

According to the present invention, said actively controlled gate controls the nozzle opening in one dimension, while the other dimension remains fixed, for example, at 0.5 mm. Thus, the nozzle is no longer circular but becomes rather rectangular.

According to another preferred embodiment of the first aspect of the present invention, said variable-width nozzle having a non-axisymmetric nozzle opening oriented towards the direction of movement of said print-head.

According to another preferred embodiment of the first aspect of the present invention, said means of movement comprises a servo, stepper or piezo electric motor.

According to another preferred embodiment of the first aspect of the present invention, said extrusion of said pellets is controlled by an extrusion control algorithm, the instantaneous size of said opening preferably being taken into account in said extrusion control algorithm with said algorithm preferably using a fluid-pressure feedback loop with a pressure sensor in said heated chamber.

The extrusion means may incorporate different transport means of either transporting the pellets directly to the printing head or in molten form to the printing head. Material can be supplied in solid form (as pellets) by 'blowing' it through a flexible tube from a supply container to the moving extrusion head. Alternatively, the moving printing head can have a small hopper from which solid pellets are fed into the extrusion system by gravity. This hopper can be periodically refilled by moving the print head to an appropriate location where pellets from a fixed storage container can be fed into it.

Material can also be supplied in liquid form to the moving extrusion head. In this case the solid pellets are fed into a fixed melting reservoir, whence the melt is fed into a flexible heat-resistant tube provided with a flexible heated sleeve, which leads to the moving extrusion head, where the material is pushed to the nozzle. The flow rate can be controlled further upstream from the extrusion head, allowing for a lighter (faster, more accurate) extrusion head.

According to another preferred embodiment of the first aspect of the present invention, said extrusion means incorporates the transport of pellets by blowing through a flexible tube from a supply container to the moving printing head, via a small hopper feeding the pellets by gravity or said heated chamber is remote from said moving printing head and said pellets are melted therein and the resulting melt fed to said moving printing head via a flexible heat-resistant tube provided with a flexible heated sleeve.

According to another preferred embodiment of the first aspect of the present invention, said extrusion means comprises a means of mechanical propulsion to propel said pellets to said heated chamber and therefrom to said nozzle.

According to another preferred embodiment of the first aspect of the present invention, said system has a pressure feedback sensor.

According to another preferred embodiment of the first aspect of the present invention, said system has a software feedback-loop.

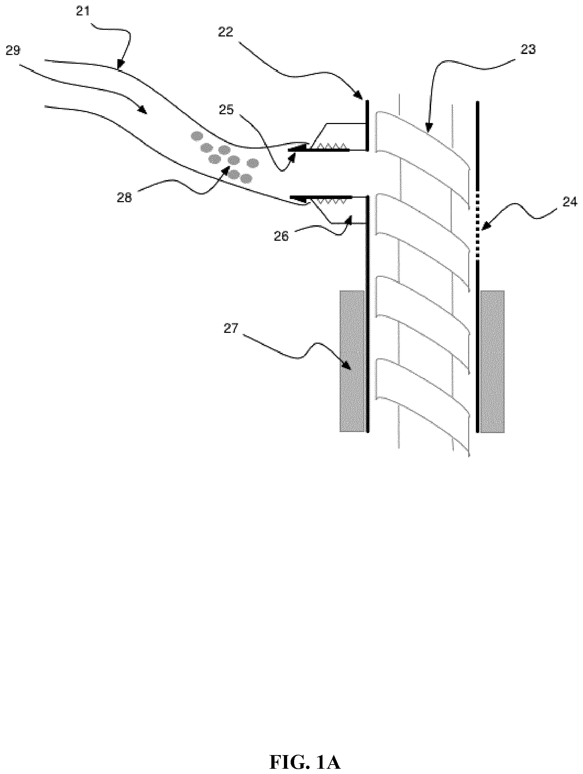

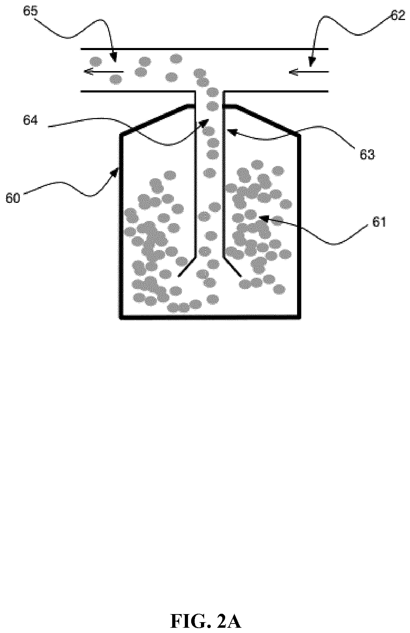

Figure 1A shows an embodiment of the first aspect of the present invention in which the build material is transported under pressure to the nozzle by the motion of a rotating auger **23.** The auger rotates inside the tube **22** and transports incoming (still solid) MIM and/or CIM pellets **28** towards the heated zone. In this embodiment a heater **27** encircling the outer tube generates the heat. The heat is controlled by a feedback loop using a temperature sensor (not shown in the picture). In this embodiment the raw build material in the form of solid MIM and/or CIM pellets **28** is blown into the extruder assembly by applying air pressure **29** inside the flexible tube **21.** One end of this tube is attached to a rigid (non-moving) assembly where the build material is picked up by the airstream from a storage container (shown in Figure 2A). The other end is clamped or otherwise attached to a tubular connector **25** that is connected to the (moving) extruder assembly. In the depicted embodiment the connector screws into an opening **26** of the extruder assembly. At the opposing side of the extruder tube, small openings **24** are made in the outer housing so that air can escape. The holes need to be smaller than the smallest possible pellet size, but large enough so air pressure build-up inside the extruder is minimal.

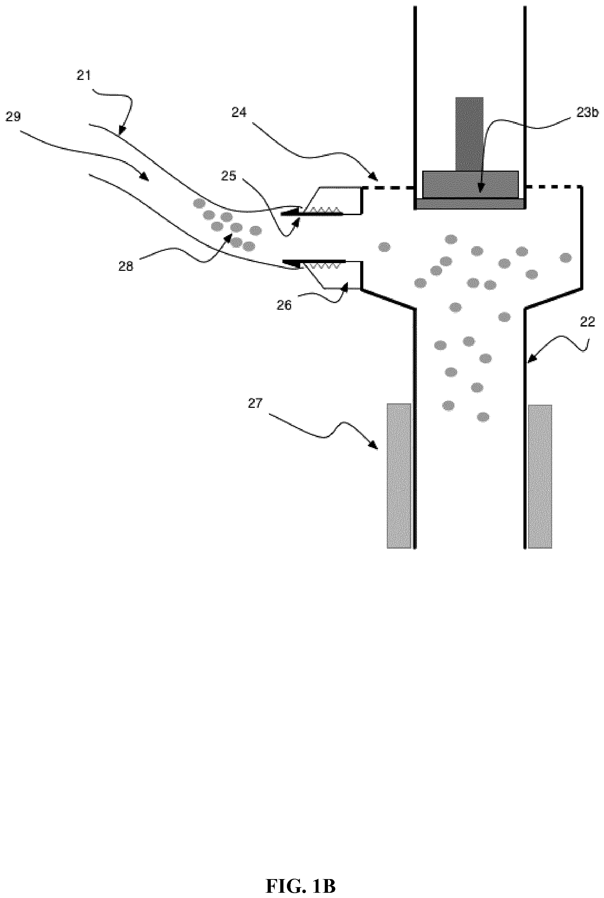

Figure 1B shows an alternative embodiment in which a reciprocal piston **23b** ensures the pressurization and transport of the build material towards the nozzle. In this embodiment the piston needs to move up first to allow new material to be blown-in, after which it can re-apply pressure and drive the pellets towards the liquidizer **27** and into the nozzle.

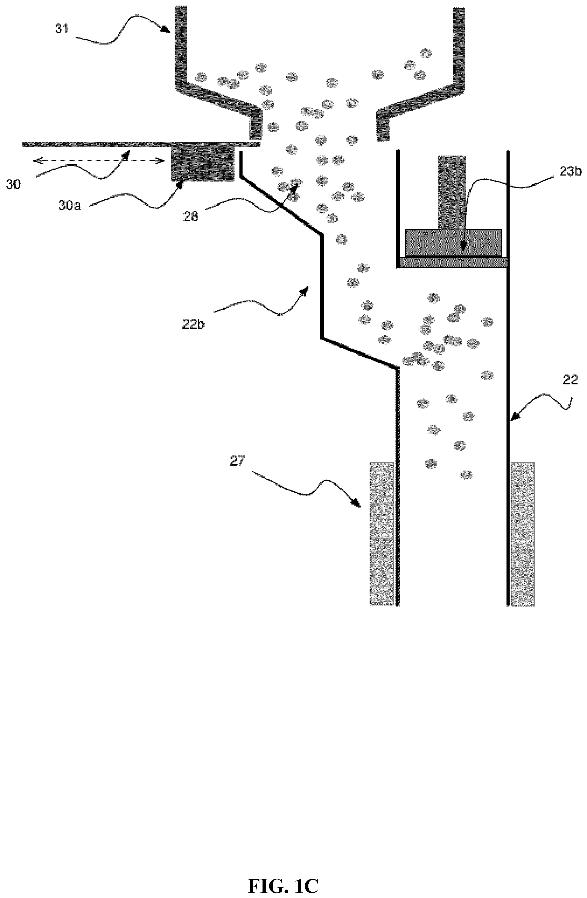

In the embodiment shown in Figure 1C, build material refill is by gravity reload with a piston-type material pressurizer. In this embodiment, the moving printing head assembly **22, 27, 22b, 23b** is moved to a section of the printer volume outside of the build area, in which it is positioned under a container of build material **31.** By moving a latch **30a**, the container is opened and pellets **28** can fall into the extruder. The control software needs to either time the refill or use a fill-level sensor (e.g. optical) to prevent over- or under-filling of the extruder.

Since the extruders are continuously moved in the build area to describe the extrusion paths, they need to be reasonably light -to ensure enough dynamic performance to allow for fast printing. Hence they cannot carry a large amount of raw (pellet) build material. Two possible material reloading principles are compressed air to blow the pellets from a storage container through a flexible hose into the extruder assembly and the use of storage containers placed overhead just outside the build area, where the extruder may travel to. In the former the hose is permanently attached to the extruder and in the latter a latch can be engaged allowing pellets to fall into the extruder assembly. Since a limited amount of material is loaded at any time in the extruder(s), one can mix different materials during the print. In the first (blow-in) reloading system, a multiplexer mechanism can switch the source container from which pellets are blown into the flexible hose. In the gravity-reload system, switching materials can be done by navigating to another container and activating another latch.

Material reload cycles can be programmed into the build script (by the 'slicing' software) or woven into the build by the machine software itself. The latter technique is useful for instance when the slicing software has no knowledge about the extruder capacity. The machine control software may base its reload decision on the amount of material extruded since the last reload, or on sensor feedback (for instance, position indicator of a plunger system or rotation counts of an auger system).

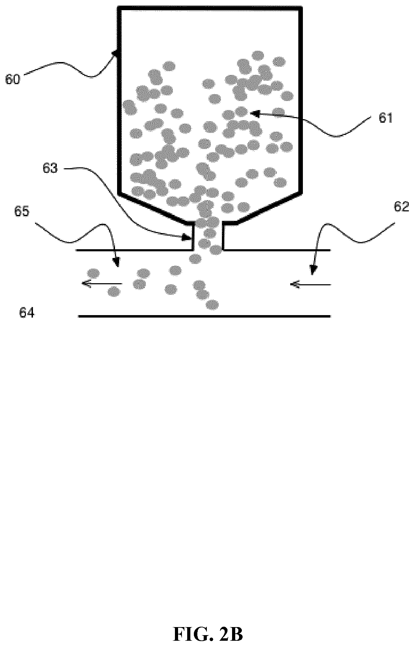

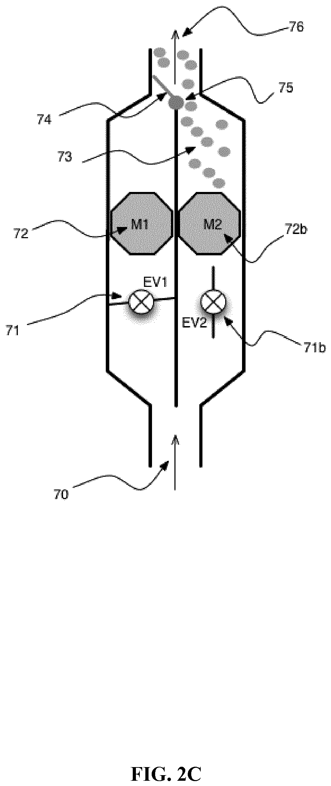

Figures 2A and 2B show different methods of build material pick-up and Figure 2C shows a multiplexer. In Figure 2A the pellet material is transported by blow-in, a pressurized airstream **62** entering a large tube. A smaller cross-sectional tube **63** forms a T-shape with the large air tube. This smaller tube **63** is placed inside a build material container **60.** As a result of the Venturi effect, the pellets **61** are sucked out of the container and drawn into the air stream (going from right to left in the main tube). The pellet-loaded airstream **65** is then fed into a flexible hose that is connected on the other to the (moving) extruder assembly (as shown in Figures 1A and 1B).

In Figure 2B the pellet container is inverted, and the ingress of pellets into the airstream **62** is aided by gravity. Optionally actively controlled valves are used to limit or shut off the container's pellet entry into the airstream, so as to control the rate of flow of build material that is transported.

Figure 2C depicts multiplexing which can be used to change the build materials on the fly. If a gravity-based reloading system is used (see Figure 1C), simply navigating to another container filled with another pellet type changes the build material in the extruder. Any residual material in the extruder will have to be purged, however, for a clean material change to take place. Purging can be done in a well specified 'dump' area and a special cleaning material can be used to clean out the extruder between build material changes. These steps can all be programmed into the build script individually or as a macro, in which case the machine controller software will execute the individual actions. If blow-in material transport is used, a material multiplexer can be used upstream of the flexible hose leading the material into the extruder assembly. Such a multiplexer system (with 2 materials) is depicted in Figure 2C. The pressurized airstream **70** enters the system and is split into as many paths as there are build materials. In these paths, electronically controlled valves **71** and **71b** are placed. After the valves, the material containers **72** and **72b** are placed in the airstream. In the path in which the valve is open (**71b** in this example) the airstream picks up build material **73** (from container **72b** in this example). Optionally, a passive butterfly-style valve **74** (passively rotating around **75**) is placed downstream and flips according to the path in which the airstream is flowing. This simple valve system effectively closes the other pathway and prevents material from flowing back into it. In the case of three or more materials, a more complex (active) valve system will be needed to prevent material backflow.

According to the present invention, the loss of dosing accuracy due to the use of raw pellet extrusion combined with the larger mass of highly loaded MIM or CIM materials is prevented by using a nozzle with variable geometry. The nozzle incorporates an actively controlled set of barriers that control the nozzle opening in 1 dimension. The other dimension remains fixed to some small value (e.g. 0.5mm). Thus, the nozzle is no longer circular but is rather rectangular. Using this, the nozzle can be completely closed to prevent material leakage. Much wider extrusion 'roads' can also be realized, where applicable, which can shorten printing time significantly. On the other hand, the opening can be selectively closed to a smaller value to print finer detail. Also, the fact that the nozzle opening becomes rectangular can improve surface quality of the object since stacking of 'cylinder-shaped roads' by a circular nozzle produces a ribbed surface, while a rectangular opening would stack straight sections giving a smoother outside surface. Since the extruded material is rectangular, in contrast to present-day FDM machines where the (fixed) nozzles have a circular aperture, the variable geometry nozzle necessarily needs to rotate while printing, to make sure the extrusion opening is always oriented perpendicular to the path direction. The orientation of the nozzle is continuously adjusted by the machine's control software, while the nozzle width adjustments and their associated extrusion flow rates should be generated by the 'slicing' software that generates the build script prior to starting the print.

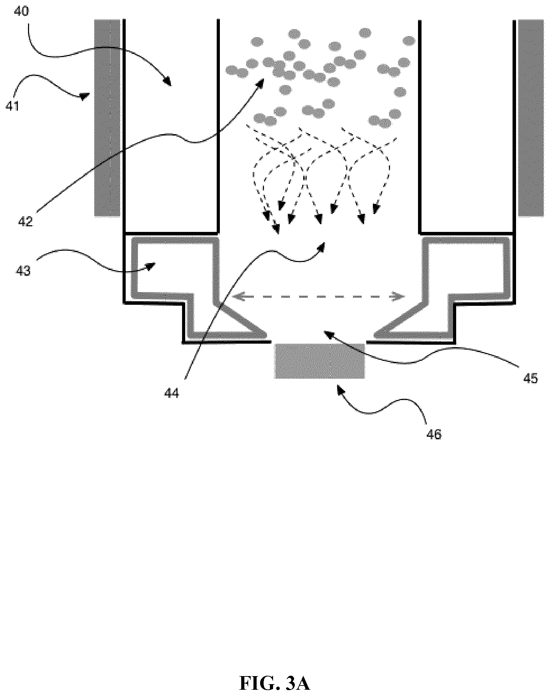

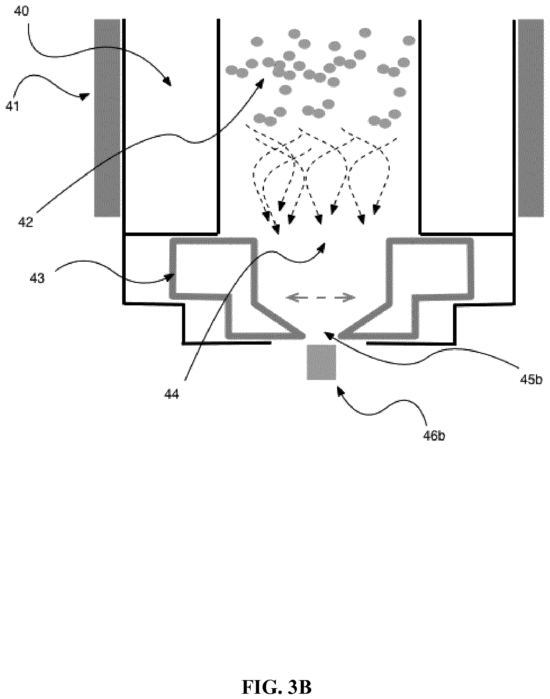

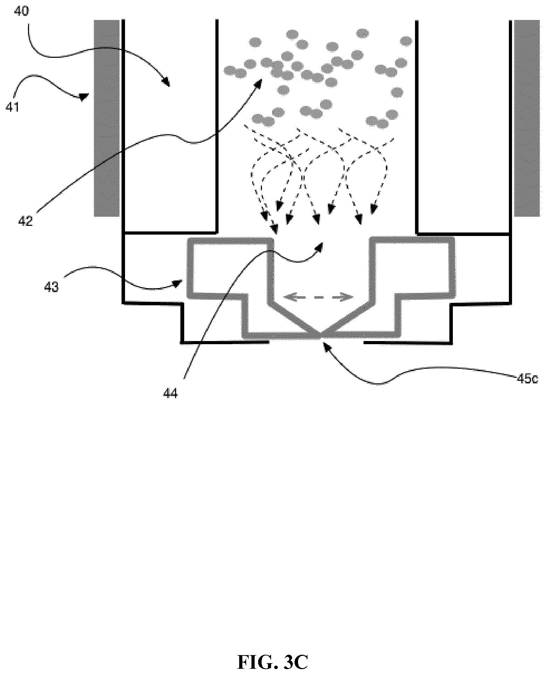

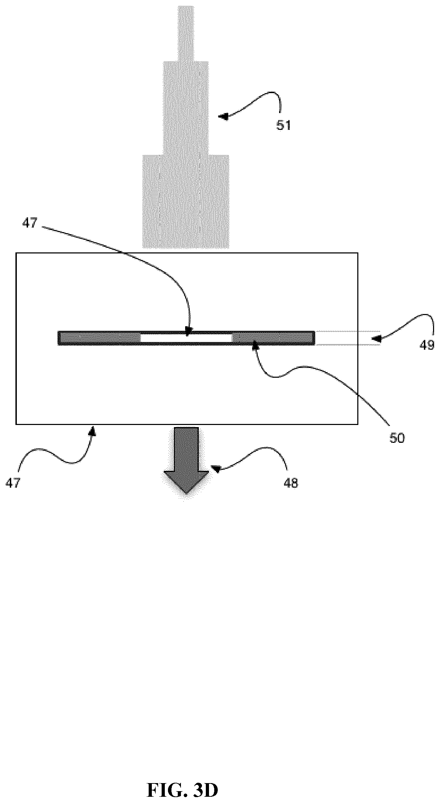

Figures 3A, 3B, 3C and 3D show a nozzle with variable geometry in one dimension. This nozzle incorporates a variable-width slit mechanism having an opening **45** that is defined by the position of two opposing barriers **43.** The barriers (or guards) **43** can be moved closer together in a symmetrical manner, such that the centre of the extruded material **46** is always in the centre of the extruder. The opening **45** is very small (e.g. 0.2 - 0.5 mm) in the dimension perpendicular to the axis in which the barriers can vary the width of the extrusion, such that when the barriers are close together an (rectangular) extrusion can be produced with similar dimensions (smaller than 0.5 mm in diameter) to present-day fixed-nozzle FDM extruders. Build material, in the form of pellets **42** is driven downwards, by applying pressure (either mechanical or pneumatic). On the way down, the pellets are melted by the heat of the surrounding extruder walls **40.** The heat is generated by resistive heater elements **41** wrapped around or embedded in the extruder structure. As the build material softens (**44**), the applied pressure drives it toward the slit.

Figures 3B and 3C show how gradually closing the slit modifies the extrusion width. In the embodiment shown in Figure 3C, the barriers **43** actually touch one another and close the extrusion opening completely. This configuration can be used to prevent material leakage.

Figure 3D shows a bottom view of this system, in a rectangular embodiment **47.** Numerical indication **49** shows the slit and its fixed length, **50** shows the barriers and **47** is the extrusion opening. Numerical indication **48** shows the direction of travel of the extrusion head, and some widths of extrusion paths are shown behind the extruder (**51**). It is important to stress that the extrusion opening should always be oriented perpendicular to the direction of travel **48.** The rotation of the extruder is not shown explicitly in this picture, but it is clear that a precise orientation of the rectangular nozzle opening is necessary to ensure a controlled extrusion path.

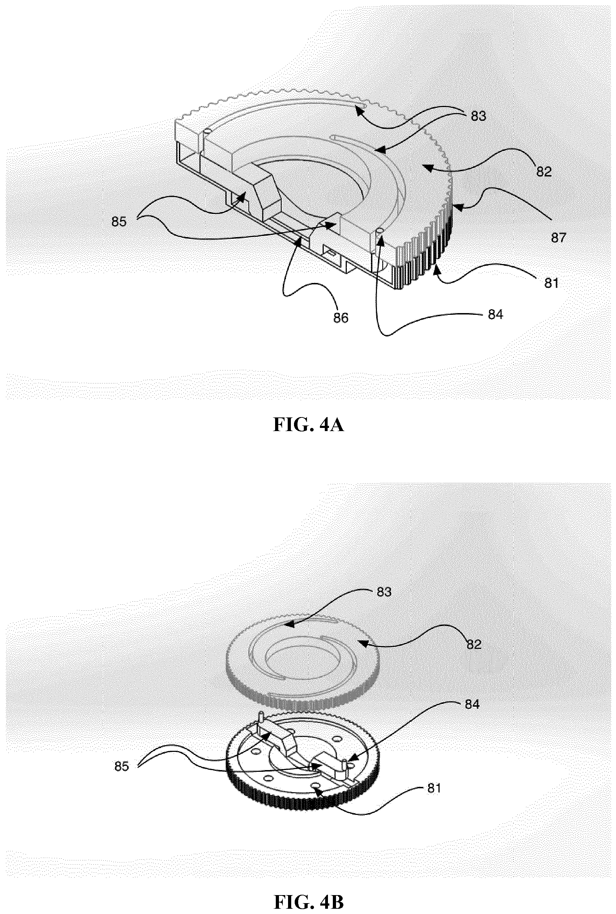

Figures 4A and 4B show embodiments of the present invention with variable geometry in which the nozzle rotates freely. The nozzle slit opening **86** is cut out of a heat and abrasion-resistant circular component **81.** In a passage oriented along the slit, two guards **85** can slide to open and close the nozzle and vary the extrusion width. The guards have a pin **84** on their topside, which slides in a spiral-shaped opening **83** cut out of another freely rotating component **82.** Diaphragm component **82** can rotate independently from the nozzle component **81.** The opening of the nozzle can be changed continuously by altering the orientation angle of component **82** with respect to component **81.** Both **81** and **82** have 'teeth' **87** on their outer surface, to allow for an actuator to control their rotation from the outside.

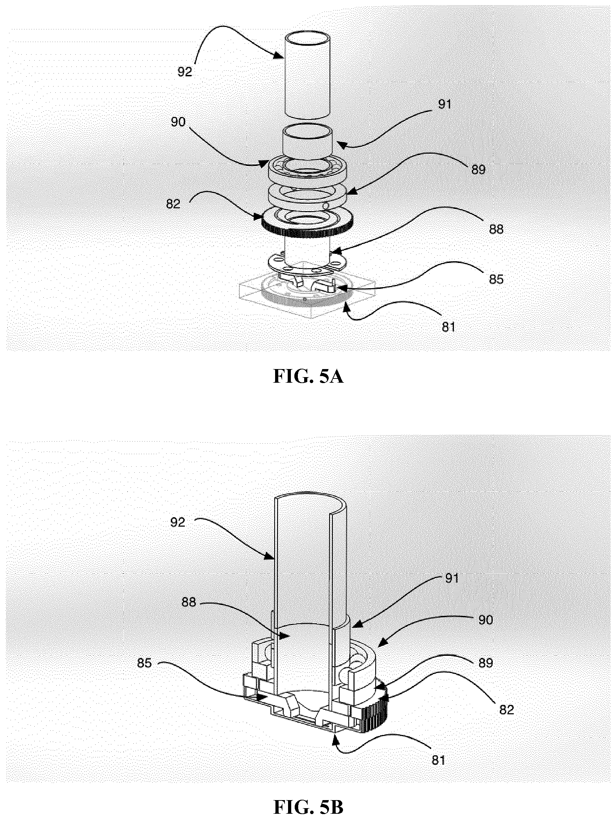

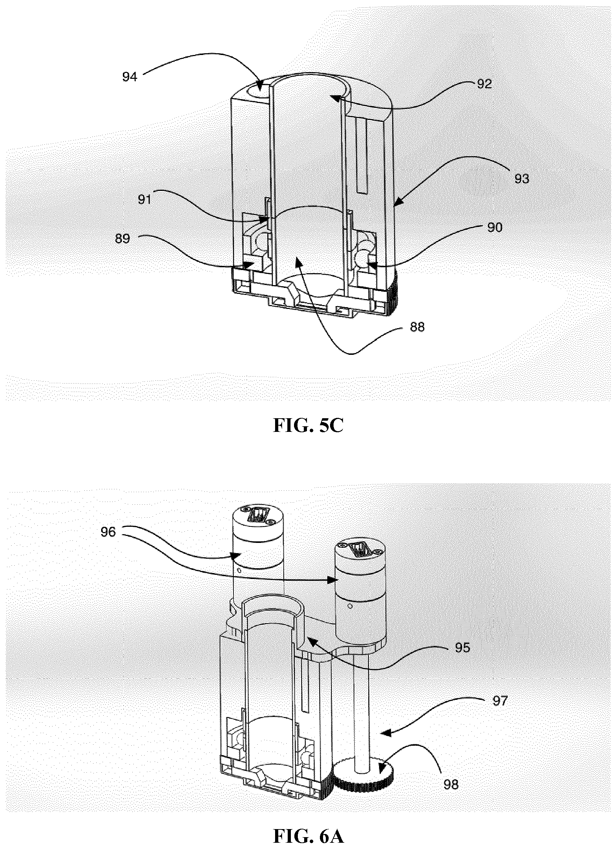

Figures 5A, 5B and 5C show an embodiment of a freely rotating variable nozzle with bearing and heat-block, according to the first aspect of the present invention, together with its upper path components. Figure 5A shows the separate components thereof excluding the heat-block, Figure 5B shows these components assembled together and Figure 5C shows this assembly together with a heat-block. The nozzle component **81** is firmly connected to component **88** after the guards **84** have been placed. On top of **88** and rotating freely around it is component **82,** which controls the opening of the guards. On top of that there is a bearing assembly, which makes sure nozzle assembly **81-88** can freely rotate with little friction with respect to the printer's end-effector position, while the pressure from the incoming liquidized build material can be handled. The bearing is secured between retainer ring **89** (the outer bearing ring, which is stationary) and sealing component **91,** which is fixed firmly to **88** and rotates together with the nozzle assembly.

Figure 5C shows the retainer ring **89** firmly fixed to the heat-block **93** which in turn is attached to the upper tube **92** in which the build material (in pellet form) is fed under pressure into the nozzle. The heat supplied by heating elements **94** inside the heat-block **93** liquidizes the material in its path towards the nozzle opening. The components which are fixed to the printer's end-effector are **89, 92** and **93** (the outer ring of the bearing **90** is stationary as well). The rotating components are **88, 81** and **91.** Sealing ring **91** slides over the tube **92** while rotating and provides a seal to prevent liquid build material from escaping. Also note that component **82** can still rotate independently from the nozzle assembly to control the extrusion opening.

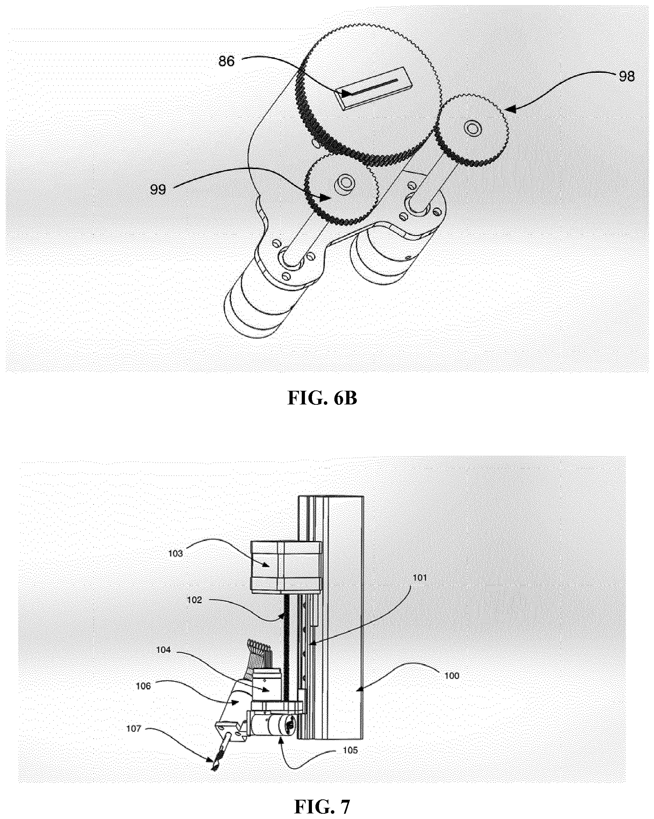

Figure 6A shows a configuration of two rotational motors **96** rigidly attached to an insulating structure **95** which in turn is fixed to the tube **92** and heat-block **93.** Both these motors drive a gear **98** and **99** respectively through an extension shaft **97.** Gear **98** drives the nozzle orientation by interfacing with the teeth on the outside of nozzle component **81.** Gear **99** interfaces with the diaphragm component **82** and thence controls the opening of the nozzle. When both motors **96** rotate the same amount in the same angular direction, the nozzle orientation is changed but the opening remains the same. However, if there is any relative difference between the rotations of the motors, the nozzle opening is varied. The control software regulates the motor motion to achieve the desired extrusion paths and extrusion widths during the build.

As the precision achieved through an FDM 3D print as well as the surface quality does not match that of well-established subtractive methods, a secondary, subtractive operation may follow the extrusion phases or interleave with them. This secondary operation would consist of cutting excess material of the deposited (partial) model by a rotating tool (as in a milling operation) and/or by cutting with heated electrodes. Since these subtractive operations take place on the green part, low-power tools are sufficient, and the structural stiffness and damping requirements of the machine remain within reasonable limits. The X/Y/Z motion of the tools can be achieved with the same motion platform used for the extrusion part of the process, or can be performed by a separate set of manipulators. In addition to the Cartesian X/Y/Z motions, the subtractive tools can be oriented through rotational axes alpha and beta, such that the complete system becomes a 5-axis subtractive tool.

These interleaving subtractive steps can be part of the generated build script (generated by a computer prior to starting the build). They can also be generated by the machine software and woven into a pure FDM build script (generated by a computer program not knowing about the subtractive capabilities of the machine).

In Figure 7 shows a subtractive assembly that is mounted onto the printer's end-effector **100.** This end-effector **100** is continuously positioned along X Y and Z coordinates over the build area. The extruder(s) (there may be multiple) are also mounted on this end-effector (not shown in the figure). The subtractive assembly is situated above the build area during deposition steps (printing layers) and can be lowered for subtractive steps by means of a linear slide **101**, and drive **102, 103** for subtractive steps. It features two rotational axes alpha **104** and beta **105**, which together with the three translational dimensions of the end-effector make it a five-axis subtractive unit. The subtraction may be performed either by spindle motor **106** and forming tools **107**, but alternatively a heated needle or wire-like element can be used to selectively remove some of the deposited build material. The tools on the subtractive assembly can be changed automatically (controlled by the build script and control software) during operation, by moving the end-effector to a suitable location outside the build area where a tool changer can be placed.

### Process

According to a second aspect of the present invention, a three-dimensional printing process is provided in accordance with claim 10. The process comprises the steps of: extruding pellets through a rectangular variable-width nozzle incorporating an actively controlled gate to provide a molten ribbon vertically above a build platform to provide a body, said pellets comprising at least one polymer.

According to the present invention, said variable-width nozzle is axially rotatable, preferably infinitely rotatable i.e. without any restriction, for example, by cables.

According to the present invention, said actively controlled gate controls the nozzle opening in one dimension, while the other dimension remains fixed, the configuration of the nozzle preferably having a reconfigurable geometry in one dimension, which is preferably software-controlled.

According to another preferred embodiment of the second aspect of the present invention, said process further comprising a pellet blow-in or gravity refill.

According to another preferred embodiment of the second aspect of the present invention, said process further comprising a change of build material during said printing process.

The present invention also concerns the fabrication of metal and ceramic parts by using an extrusion-based additive process, the process comprising the steps of: providing the feedstock in which metallic or ceramic particles are dispersed in at least one polymer as a binder; producing a 3D-printed part with the feedstock, the so-called green part; removing substantially all of the binder from the green part in a so-called debinding step thereby producing a so-called brown part; sintering the brown part into the metallic or ceramic part; and optionally finishing the metal or ceramic part in a post-sintering step.

According to another preferred embodiment of the second aspect of the present invention, said body is a green body and said pellets comprise at least 50% by volume of micron-sized metallic or ceramic particles in said at least one polymer as a binder; and wherein said process further comprises the steps of debinding said green body producing a brown body; sintering said brown body, said process preferably further comprising at least one subtractive step on said green body which is preferably performed with the same X-Y-Z actuators as for the extrusion assembly and can perform two additional rotations to realise a five-axis machining.

The steps in sintering for 3D Printing may be summarized as follows:
1) Feedstock or composite compounding.
2) 3D printing or injection moulding of feedstock or composite to form a green body or a preform.
3) Optionally at least one subtractive step on the green body.
4) Debinding, thermally, chemically or other means, of the green body to form the brown body.
5) Sintering the brown body to form the sintered part.
6) Optional post sintering finishing.

Additional processing steps are possible in the 'green' state, such as forming internal threads and other small features. Additional processing steps are also possible on the final part, after sintering, e.g. further densification through Hot Isostatic Pressure (HIP), heat treatments, surface enhancement operations (polishing), etc...

### Feedstock

The feedstock used in the present invention is pellets comprising at least one polymer, with highly loaded PIM (Powder Injection Molding) materials in pellet form being preferred and MIM and CIM pellets being particularly preferred. These pellets of highly loaded PIM materials are typically a few mm in diameter with about 50 to 70% by volume metallic or ceramic particles (in volume) in the at least one polymer as a binder, for example, a polymeric binder or wax. The metallic or ceramic particles are typically between 10 and 40 micrometers in size (depending on the material and atomization process used).

As these materials are very brittle in filament form (due to the high loading of rigid particles) they cannot easily be formed into filaments as described in US 5,121,329 and hence cannot be extruded in the commonly used FDM machines.

### Debinding

Before sintering green bodies, the debinding process of the polymers to form the brown body, such as, for example, the removal of the polymer material, must be performed. The removal of the binder is via degradation, extraction or evaporation via the surface channels in the "green body". Debinding can be the most time consuming and expensive step in the part or object formation. Debinding the part may be done via thermal, solvent or catalytic methods. Binder material is chosen based on the selection of the debinding method. The temperatures for thermal debinding vary between 60°C and 600 °C. Organic polymers have to be substantially removed from the green body, since carbon delays and can influence the sinter process. Further the qualities of the final product can be negatively impacted by residual carbon from the polymer. The debinding process typically is a time intensive step in the complete production process. The speed of decomposition of the polymers should not exceed the transport velocity of the products of pyrolysis, since an excess pressure of the gaseous pyrolysis products can lead to rips and to the destruction of the brown body.

The defining physical procedures of thermal debinding are 1) the capillary flow, 2) the low pressure diffusion process, and 3) the high pressure permeation process. The capillary forces involve liquid extraction, while the other two require the binder to be a vapour. Slightly elevated temperatures influence the viscosity and surface tension of the organic liquid; capillary forces start with the transport of the liquid phase from big to small pores. As soon as binder arrives at the surface it will be vaporized, if its vapour pressure is larger than the ambient pressure. With increasing temperature, the kinetics of volatilisation increases too. Above a certain temperature the capillary forces cannot saturate the demand of volatilisation of the liquid at the surface and the interface of both the vapour and the liquid is pulled back to the inside of the body.

The binder may be thermally decomposed into low molecular weight species, such as H₂O, CH₄, CO₂, CO etc. and subsequently removed by diffusion and permeation. The difference between diffusion and permeation depends on the mean free path of the gas species. The mean free path varies with the pressure, molecular weight of the gas and pore dimensions. Generally, diffusion will be dominant at low pressures and small pore sizes; permeation would be expected to control debinding with large pore sizes and high vapour pressures, where laminar flow controls the rate of gas exit from the compact. Typically the pressure of a debinding process varies between 10 bar and 70 bar and the grain sizes between 0.5 and 20 mm.

The thermal decomposition of polymers takes place by radical splitting of their chain. A homolytic decomposition of a C-C-bond leads to radical cracked products. The intermolecular transfer of hydrogen and the continuous decomposition of the polymeric chain create saturated and unsaturated fractions consisting of monomers and oligomers during the debinding process.

### Sintering

Sintering is the process whereby particles bond together typically below the melting point by atomic transport events. A characteristic feature of sintering is that the rate is very sensitive to temperature. The driving force for sintering is a reduction in the system free energy, manifested by decreased surface curvatures, and an elimination of surface area" (Powder Metallurgy Science, 1989, p. 148).

If required for product specifications, inert, reducing and/or oxidizing atmospheres, applied during the appropriate stage of the sintering process, may provide useful characteristics to the final product.

## Claims

1. A three-dimensional printing system comprising a print head vertically arranged above a build platform, said print head having a variable-width nozzle with a rectangular opening [45] having a size, a means of moving said print-head and a means for directly extruding pellets through said variable-width nozzle to provide a molten ribbon vertically above said build platform, said pellets comprising at least one polymer, said extrusion means incorporating a heated chamber before said nozzle and said variable-width nozzle incorporating an actively controlled gate, wherein said actively controlled gate controls the nozzle opening in one dimension, while the other dimension remains fixed, and wherein said variable-width nozzle is axially rotatable.

2. The printing system according to claim 1, wherein said variable-size nozzle has a non-axisymmetric nozzle opening oriented towards the direction of movement of said print-head.

3. The printing system according to claim 1 or 2, wherein said means of movement comprises a servo, stepper or piezo electric motor.

4. The printing system according to any one of claims 1 to 3, wherein said extrusion of said pellets is controlled by an extrusion control algorithm.

5. The printing system according to claim 4, wherein the instantaneous size of said opening is taken into account in said extrusion control algorithm.

6. The printing system according to claim 5, wherein said algorithm uses a fluid-pressure feedback loop with a pressure sensor in said heated chamber.

7. The printing system according to any one of claims 1 to 5, wherein said extrusion means incorporates the transport of pellets by blowing through a flexible tube [21] from a supply container [31] to the moving printing head, via a small hopper feeding the pellets by gravity or said heated chamber is remote from said moving printing head and said pellets are melted therein and the resulting melt fed to said moving printing head via a flexible heat-resistant tube provided with a flexible heated sleeve.

8. Use of a printing system according to any one of the preceding claims with said pellets comprising at least one polymer.

9. The use according to claim 8, wherein said pellets comprise at least 50% by volume of micron-sized metallic or ceramic particles in said at least one polymer as a binder.

10. A three-dimensional printing process, said process comprising the steps of: directly extruding pellets through a rectangular variable-width nozzle incorporating an actively controlled gate to provide a molten ribbon vertically above a build platform to provide a body, said pellets comprising at least one polymer, wherein said actively controlled gate controls the nozzle opening in one dimension, while the other dimension remains fixed, and wherein said variable-width nozzle is axially rotatable.

11. The three-dimensional printing process according to claim 10, wherein said body is a green body and said pellets comprise at least 50% by volume of micron-sized metallic or ceramic particles in said at least one polymer as a binder; and wherein said process further comprises the steps of debinding said green body producing a brown body; sintering said brown body.

12. The three-dimensional printing process according to claim 11, wherein said process further comprises at least one subtractive step on said green body.

## Patentansprüche

1. Dreidimensionales Drucksystem, umfassend einen Druckkopf, der vertikal über einer Fertigungsplatte angeordnet ist, wobei der Druckkopf eine Düse variabler Breite mit einer rechteckigen Öffnung [45] mit einer Größe aufweist, ein Mittel zum Bewegen des Druckkopfs und ein Mittel zum direkten Extrudieren von Pellets durch die Düse variabler Breite, um ein geschmolzenes Band vertikal über der Fertigungsplatte bereitzustellen, wobei die Pellets zumindest ein Polymer umfassen, das Extrusionsmittel eine erhitzte Kammer vor der Düse beinhaltet und die Düse variabler Breite einen aktiv gesteuerten Schieber beinhaltet, wobei der aktiv gesteuerte Schieber die Düsenöffnung in einer Dimension steuert, während die andere Dimension fixiert bleibt, und wobei die Düse variabler Breite axial drehbar ist.

2. Drucksystem nach Anspruch 1, wobei die Düse variabler Größe eine nicht achssymmetrische Düsenöffnung aufweist, die zur Bewegungsrichtung des Druckkopfs ausgerichtet ist.

3. Drucksystem nach Anspruch 1 oder 2, wobei das Bewegungsmittel einen Servo-, Schritt- oder piezoelektrischen Motor umfasst.

4. Drucksystem nach einem der Ansprüche 1 bis 3, wobei die Extrusion der Pellets durch einen Extrusionssteueralgorithmus gesteuert ist.

5. Drucksystem nach Anspruch 4, wobei die momentane Größe der Öffnung im Extrusionssteueralgorithmus berücksichtigt wird.

6. Drucksystem nach Anspruch 5, wobei der Algorithmus eine Fluiddruckrückkopplungsschleife mit einem Drucksensor in der erhitzten Kammer verwendet.

7. Drucksystem nach einem der Ansprüche 1 bis 5, wobei das Extrusionsmittel den Transport von Pellets beinhaltet, die durch einen flexiblen Schlauch [21] von einem Vorratsbehälter [31] zum sich bewegenden Druckkopf über einen kleinen Trichter geblasen werden, der die Pellets durch Schwerkraft zuführt, oder die erhitzte Kammer fern dem sich bewegenden Druckkopf ist und die Pellets darin geschmolzen werden und die erhaltene Schmelze zu dem sich bewegenden Druckkopf über einen flexiblen hitzebeständigen Schlauch zugeführt wird, der mit einer flexiblen erhitzten Hülle bereitgestellt ist.

8. Verwendung eines Drucksystems nach einem der vorstehenden Ansprüche, wobei die Pellets zumindest ein Polymer umfassen.

9. Verwendung nach Anspruch 8, wobei die Pellets zumindest 50 Volumenprozent metallischer oder keramischer Partikel in Mikrometergröße in dem mindestens einen Polymer als Bindemittel umfassen.

10. Dreidimensionaler Druckprozess, wobei der Prozess die Schritte umfasst zum: direkten Extrudieren von Pellets durch eine rechteckige düse variabler Breite, die einen aktiv gesteuerten Schieber enthält, um ein geschmolzenes Band vertikal über einer Fertigungsplatte bereitzustellen, um einen Körper bereitzustellen, wobei die Pellets zumindest ein Polymer umfassen, wobei der aktiv gesteuerte Schieber die Düsenöffnung in einer Dimension steuert, während die andere Dimension fixiert bleibt, und wobei die Düse variabler Breite axial drehbar ist.

11. Dreidimensionaler Druckprozess nach Anspruch 10, wobei der Körper ein Grünkörper ist und die Pellets zumindest 50 Volumenprozent metallischer oder keramischer Partikel in Mikrometergröße in dem mindestens einen Polymer als Bindemittel umfassen; und wobei der Prozess ferner die Schritte zum Entbindern des Grünkörpers, wodurch ein Braunkörper produziert wird; Sintern des Braunkörpers umfasst.

12. Dreidimensionaler Druckprozess nach Anspruch 11, wobei der Prozess ferner mindestens einen substraktiven Schritt an dem Grünkörper umfasst.

## Revendications

1. Système d'impression tridimensionnelle comprenant une tête d'impression agencée verticalement au-dessus d'un plateau de construction, ladite tête d'impression ayant une buse de largeur variable avec une ouverture rectangulaire [45] ayant une taille, un moyen de déplacement de ladite tête d'impression et un moyen pour directement extruder des pastilles à travers ladite buse de largeur variable pour fournir un ruban fondu verticalement au-dessus dudit plateau de construction, lesdites pastilles comprenant au moins un polymère, ledit moyen d'extrusion incorporant une chambre chauffée avant ladite buse et ladite buse de largeur variable incorporant une porte commandée de façon active, dans lequel ladite porte commandée de façon active commande l'ouverture de buse dans une seule dimension, tandis que l'autre dimension reste fixe, et dans lequel ladite buse de largeur variable est rotative de façon axiale.

2. Système d'impression selon la revendication 1, dans lequel ladite buse de taille variable a une ouverture de buse non axisymétrique orientée vers la direction de déplacement de ladite tête d'impression.

3. Système d'impression selon la revendication 1 ou 2, dans lequel ledit moyen de déplacement comprend un servomoteur, un moteur pas à pas ou un moteur électrique piézoélectrique.

4. Système d'impression selon l'une quelconque des revendications 1 à 3, dans lequel ladite extrusion desdites pastilles est commandée par un algorithme de commande d'extrusion.

5. Système d'impression selon la revendication 4, dans lequel la taille instantanée de ladite ouverture est prise en compte dans ledit algorithme de commande d'extrusion.

6. Système d'impression selon la revendication 5, dans lequel ledit algorithme utilise une chaîne de rétroaction à pression de fluide avec un capteur de pression dans ladite chambre chauffée.

7. Système d'impression selon l'une quelconque des revendications 1 à 5, dans lequel ledit moyen d'extrusion incorpore le transport de pastilles par soufflage à travers un tube souple [21] en provenance d'un conteneur d'alimentation [31] jusqu'à la tête d'impression mobile, via une petite trémie amenant les pastilles par gravité ou ladite chambre chauffée est distante de ladite tête d'impression mobile et lesdites pastilles sont fondues en son sein et la fonte résultante est amenée jusqu'à ladite tête d'impression mobile via un tube souple résistant à la chaleur muni d'un manchon chauffé souple.

8. Utilisation d'un système d'impression selon l'une quelconque des revendications précédentes, lesdites pastilles comprenant au moins un polymère.

9. Utilisation selon la revendication 8, dans laquelle lesdites dans lesquelles pastilles comprennent au moins 50 % en volume de particules métalliques ou céramiques de taille micronique dans ledit au moins un polymère en tant que liant.

10. Processus d'impression tridimensionnelle, ledit processus comprenant les étapes consistant à : extruder directement des pastilles à travers une buse rectangulaire de largeur variable incorporant une porte commandée de façon active pour fournir un ruban fondu verticalement au-dessus d'un plateau de construction pour définir un corps, lesdites pastilles comprenant au moins un polymère, dans lequel ladite porte commandée de façon active commande l'ouverture de buse dans une seule dimension, tandis que l'autre dimension reste fixe, et dans lequel ladite buse de largeur variable est rotative de façon axiale.

11. Processus d'impression tridimensionnelle selon la revendication 10, dans lequel ledit corps est un corps vert et lesdites pastilles comprennent au moins 50 % en volume de particules métalliques ou céramiques de taille micronique dans ledit au moins un polymère en tant que liant ; et dans lequel ledit processus comprend en outre les étapes consistant à délianter ledit corps vert produisant un corps brun ; fritter ledit corps brun.

12. Processus d'impression tridimensionnelle selon la revendication 11, dans lequel ledit processus comprend en outre au moins une étape soustractive sur ledit corps vert.
